# EUROPEAN PATENT APPLICATION

(11) **EP 4 636 694 A1**
(43) Date of publication of application: **22.10.2025**
(21) Application number: 24744142.1
(22) Date of filing: 10.01.2024
(51) Int. Cl.: G06T 7/50, G06T 7/521

(54) **DEPTH ESTIMATION METHOD, AND APPARATUS**

(30) Priority: 17.01.2023 CN 202310090553; 26.09.2023 CN 202311250186
(71) Applicant: Huawei Technologies Co., Ltd., Shenzhen, Guangdong 518129 (CN)
(72) Inventor: WANG, Yaoyuan, Shenzhen, Guangdong 518129 (CN); LUO, Wentao, Shenzhen, Guangdong 518129 (CN); ZHANG, Ziyang, Shenzhen, Guangdong 518129 (CN); HE, Weihua, Shenzhen, Guangdong 518129 (CN); DING, Wei, Shenzhen, Guangdong 518129 (CN); WANG, Yuchen, Shenzhen, Guangdong 518129 (CN)
(74) Representative: Goddar, Heinz J.
(86) International application number: PCT/CN2024/071667
(87) International publication number: WO 2024/152966

(57) **Abstract**

This application relates to the field of computer technologies, and provides a depth estimation method and apparatus, to resolve a problem that a depth estimation result is inaccurate. The method includes: separately obtaining a to-be-detected image captured by a camera and radar data synchronously collected by a radar sensor; determining a reference line in the to-be-detected image; registering the radar data with the to-be-detected image, where a registered to-be-detected image includes the reference line and a radar line obtained based on the radar data, and the radar line includes pixels in the to-be-detected image that correspond to reflection points corresponding to the radar data; determining, based on the reference line and the radar line, a mask corresponding to the registered to-be-detected image; and inputting the radar data, the to-be-detected image, and the mask into a depth estimation model, to obtain a depth image corresponding to the to-be-detected image. This application is applied to a depth estimation process.

## Description

This application claims priorities to Chinese Patent Application No. 202310090553.X, filed with the China National Intellectual Property Administration on January 17, 2023 and entitled "DEPTH ESTIMATION METHOD AND APPARATUS", and to Chinese Patent Application No. 202311250186.1, filed with the China National Intellectual Property Administration on September 26, 2023 and entitled "DEPTH ESTIMATION METHOD AND APPARATUS", which are incorporated herein by reference in their entireties.

### TECHNICAL FIELD

This application relates to the field of computer technologies, and in particular, to a depth estimation method and apparatus.

### BACKGROUND

Depth estimation is to estimate a distance between each pixel in an image and a shooting source based on a two-dimensional color image, to output a depth image. Depth estimation is widely used in scenarios such as obstacle detection, simultaneous localization and mapping (simultaneous localization and mapping, SLAM), three-dimensional reconstruction, somatosensory gaming, and intelligent driving.

Currently, there are a plurality of depth estimation solutions, but obtained depth estimation results are not accurate.

### SUMMARY

To resolve the foregoing technical problem, embodiments of this application provide a depth estimation method and apparatus. According to technical solutions provided in embodiments of this application, accuracy of depth estimation is effectively improved, and hardware costs of depth estimation are reduced.

To achieve the foregoing technical objective, embodiments of this application provide the following technical solutions.

According to a first aspect, a depth estimation method is provided. The method includes: separately obtaining a to-be-detected image captured by a camera and radar data synchronously collected by a radar sensor; first determining a reference line in the to-be-detected image, and registering the radar data with the to-be-detected image, where in the registered to-be-detected image, a radar line includes pixels in the to-be-detected image that correspond to reflection points corresponding to the radar data; determining, based on the reference line and the radar line, a mask corresponding to the registered to-be-detected image; and obtaining, based on the radar data, the to-be-detected image, and the mask, a depth image corresponding to the to-be-detected image.

According to the first aspect, a radar grayscale image corresponding to the to-be-detected image is obtained by filling the to-be-detected image with the radar data.

**In** some examples, the to-be-detected image is an image actually shot by the camera, and is generally a two-dimensional color image.

In some examples, when the camera shoots the to-be-detected image, the radar sensor synchronously obtains the radar data corresponding to the to-be-detected image, and the radar data may be two-dimensional radar data.

According to any one of the first aspect or the implementations of the first aspect, the determining a reference line in the to-be-detected image includes: determining a ground area in the to-be-detected image; performing at least one of the following processing on the ground area: connectivity check, complement, or expansion; and determining a boundary contour line of an outermost ground plane in a processed ground area as the reference line.

According to any one of the first aspect or the implementations of the first aspect, the determining a ground area in the to-be-detected image includes: recognizing the ground area in the to-be-detected image based on a segmentation network.

In some examples, the segmentation network may be a semantic segmentation network or an image segmentation network.

In a possible implementation, the ground area in the to-be-detected image is determined based on pixel information included in the to-be-detected image.

According to any one of the first aspect or the implementations of the first aspect, the registering the radar data with the to-be-detected image, where a registered to-be-detected image includes the reference line and a radar line obtained based on the radar data includes: jointly calibrating the radar sensor and the camera, to determine a transformation matrix; and registering the radar data with the to-be-detected image based on the transformation matrix, where the registered to-be-detected image includes the reference line and the radar line obtained based on the radar data.

In a possible implementation, the transformation matrix is determined based on internal and external parameters of the camera and the radar sensor, a pixel in the to-be-detected image corresponding to a transmission point corresponding to each piece of radar data is determined based on the transformation matrix, and radar data of each reflection point is filled into a corresponding pixel in the to-be-detected image.

In this way, the radar data and image data are transformed into a same coordinate system through registration, to implement information fusion of the radar data and the image data.

In another possible implementation, a same feature point of the radar data and the training image data is determined, the transformation matrix is obtained through transformation based on feature point data, and registration is performed on the radar data and the training image based on the transformation matrix.

According to any one of the first aspect or the implementations of the first aspect, the determining, based on the reference line and the radar line, a mask corresponding to the registered to-be-detected image includes: determining a first area and a second area based on the reference line and the radar line; and setting a pixel value of each pixel in the first area to a first value, and setting a pixel value of each pixel in the second area to a second value, to obtain the mask corresponding to the registered to-be-detected image.

In some examples, a closed area enclosed by the reference line, the radar line, and a boundary of the registered to-be-detected image is determined as the first area based on the reference line and the radar line in the registered to-be-detected image, and an image area, in the registered to-be-detected image, other than the first area is the second area. The pixel value of each pixel in the first area is set to 1, and the first area is correspondingly displayed in white. The pixel value of each pixel in the second area is set to 0, and the second area is correspondingly displayed in black. In this way, the mask corresponding to the registered training image is obtained.

In this way, during subsequent depth estimation, it may be clearly known, based on the mask, data that needs to be mainly calculated, for example, data corresponding to the first area in the mask is to be mainly calculated.

According to any one of the first aspect or the implementations of the first aspect, the first area is a closed area enclosed by the radar line, the reference line, and a boundary of the registered to-be-detected image, and the second area is an area, in the to-be-detected image, other than the first area.

According to any one of the first aspect or the implementations of the first aspect, the depth estimation model is obtained through training based on a training image and radar data corresponding to the training image.

According to any one of the first aspect or the implementations of the first aspect, the depth estimation method further includes: obtaining training data, where the training data includes the training image and the radar data corresponding to the training image; determining a reference line in the training image; registering the radar data corresponding to the training image with the training image, where a registered training image includes the reference line of the training image and a radar line obtained based on the radar data corresponding to the training image; determining, based on the reference line of the training image and the radar line obtained based on the radar data corresponding to the training image, a mask corresponding to the registered training image; inputting a radar grayscale image corresponding to the training image, the training image, and the mask into a depth estimation network, to obtain a depth image corresponding to the training image, where the radar grayscale image corresponding to the training image is obtained by filling the training image with the radar data corresponding to the training image; inputting the training image into a pose estimation network, to obtain pose information; determining a loss function based on the depth image and the pose information; adjusting a training parameter of the depth estimation network based on the loss function; and training the depth estimation network based on the training parameter, and converging training to obtain the depth estimation model.

In this way, the depth estimation model is obtained through training based on a large amount of training data, the depth estimation model obtained through training can predict high-precision depth information, and an image depth is accurately estimated based on the depth estimation model obtained through training.

According to a second aspect, an embodiment of this application provides a depth estimation apparatus. The apparatus includes: an obtaining module, configured to separately obtain a to-be-detected image captured by a camera and radar data synchronously collected by a radar sensor; a first determining module, configured to determine a reference line in the to-be-detected image; a registration module, configured to register the radar data with the to-be-detected image, where a registered to-be-detected image includes the reference line and a radar line obtained based on the radar data, and the radar line includes pixels in the to-be-detected image that correspond to reflection points corresponding to the radar data; a second determining module, configured to determine, based on the reference line and the radar line, a mask corresponding to the registered to-be-detected image; and a depth estimation module, configured to obtain, based on the radar data, the to-be-detected image, and the mask, a depth image corresponding to the to-be-detected image.

According to a third aspect, an embodiment of this application provides an electronic device. The electronic device includes a processor, a camera, and a radar sensor.

According to the third aspect, in a possible implementation, the camera is configured to capture a to-be-detected image.

According to the third aspect, in a possible implementation, the radar sensor is configured to synchronously collect radar data with the camera.

According to the third aspect, in a possible implementation, the processor is configured to separately obtain the to-be-detected image captured by the camera and the radar data synchronously collected by the radar sensor.

According to the third aspect, in a possible implementation, the processor is further configured to determine a reference line in the to-be-detected image.

According to the third aspect, in a possible implementation, the processor is further configured to register the radar data with the to-be-detected image, where a registered to-be-detected image includes the reference line and a radar line obtained based on the radar data.

According to the third aspect, in a possible implementation, the radar line includes pixels in the to-be-detected image that correspond to reflection points corresponding to the radar data.

According to the third aspect, in a possible implementation, the processor is further configured to determine, based on the reference line and the radar line, a mask corresponding to the registered to-be-detected image.

The processor is further configured to obtain, based on the radar data, the to-be-detected image, and the mask, a depth image corresponding to the to-be-detected image.

According to the third aspect, in a possible implementation, a radar grayscale image corresponding to the to-be-detected image is obtained by filling the to-be-detected image with the radar data.

According to the third aspect, in a possible implementation, the processor is further configured to determine a ground area in the to-be-detected image. The processor is further configured to perform at least one of the following processing on the ground area: connectivity check, complement, or expansion. The processor is further configured to determine a boundary contour line of an outermost ground plane in a processed ground area as the reference line.

According to the third aspect, in a possible implementation, the processor is further configured to recognize the ground area in the to-be-detected image based on a segmentation network.

According to the third aspect, in a possible implementation, the processor is further configured to jointly calibrate the radar sensor and the camera, to determine a transformation matrix. The processor is further configured to register the radar data with the to-be-detected image based on the transformation matrix, where the registered to-be-detected image includes the reference line and the radar line obtained based on the radar data.

According to the third aspect, in a possible implementation, the processor is further configured to determine a first area and a second area based on the reference line and the radar line; and the first area is a closed area enclosed by the radar line, the reference line, and a boundary of the registered to-be-detected image, and the second area is an area, in the to-be-detected image, other than the first area.

According to the third aspect, in a possible implementation, the processor is further configured to: set a pixel value of each pixel in the first area to a first value, and set a pixel value of each pixel in the second area to a second value, to obtain the mask corresponding to the registered to-be-detected image.

According to a fourth aspect, an embodiment of this application provides a chip system, including at least one processor and at least one interface circuit. The at least one interface circuit is configured to: perform a transceiver function, and send instructions to the at least one processor. When the at least one processor executes the instructions, the at least one processor performs the method according to any one of the first aspect or the implementations of the first aspect.

According to a fifth aspect, a computer-readable storage medium is provided. The computer-readable storage medium stores a computer program (which may also be referred to as instructions or code). When the computer program is run on an electronic device, the electronic device is enabled to perform the method according to any one of the first aspect or the implementations of the first aspect.

According to a sixth aspect, a computer program product is provided. When the computer program product runs on a computer, the computer is enabled to perform the method according to any one of the first aspect or the implementations of the first aspect.

For technical effects corresponding to any one of the second aspect to the sixth aspect or the implementations of the second aspect to the sixth aspect, refer to technical effects corresponding to any one of the first aspect or the implementations of the first aspect. Details are not described herein again.

### BRIEF DESCRIPTION OF DRAWINGS

FIG. 1 is a diagram of a structure of a depth estimation model training device in a depth estimation method according to an embodiment of this application;
FIG. 2 is a diagram of a hardware structure of an electronic device according to an embodiment of this application;
FIG. 3 is a schematic flowchart of a depth estimation model training method in a depth estimation method according to an embodiment of this application;
FIG. 4 is a diagram 1 of a depth estimation model training scenario in a depth estimation method according to an embodiment of this application;
FIG. 5 is a diagram 2 of a depth estimation model training scenario in a depth estimation method according to an embodiment of this application;
FIG. 6 is a diagram 3 of a depth estimation model training scenario in a depth estimation method according to an embodiment of this application;
FIG. 7 is a diagram 4 of a depth estimation model training scenario in a depth estimation method according to an embodiment of this application;
FIG. 8 is a schematic flowchart of a depth estimation method according to an embodiment of this application;
FIG. 9 is a diagram of a system architecture of a depth estimation method according to an embodiment of this application; and
FIG. 10 is a diagram of a structure of an electronic device according to an embodiment of this application.

### DESCRIPTION OF EMBODIMENTS

In descriptions of embodiments of this application, unless otherwise specified, "/" indicates "or", for example, A/B may indicate A or B. In this specification, "and/or" merely describes an association relationship between associated objects, and indicates that three relationships may exist. For example, A and/or B may indicate three cases: Only A exists, both A and B exist, and only B exists.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

In the descriptions of embodiments of this application, unless otherwise specified, "a plurality of" means two or more than two. In addition, in embodiments of this application, the word "as an example" or "for example" is used to indicate giving an example, an illustration, or a description. Any embodiment or design scheme described as an "example" or "for example" in embodiments of this application should not be explained as being more preferred or having more advantages than another embodiment or design scheme. Exactly, use of the word "as an example", "for example", or the like is intended to present a related concept in a specific manner.

To better understand technical solutions of this application, specific implementations of technologies related to depth estimation are first described in detail.

Related technology 1: In an existing depth estimation method, a depth may be calculated based on three-dimensional point cloud data. Specifically, a multi-line (for example, 64-line) lidar is used to scan an object to obtain three-dimensional point cloud data, and then the depth is calculated based on the three-dimensional point cloud data. However, costs of the multi-line lidar are high, and hardware costs of this solution are too high.

Related technology 2: In an existing depth estimation method, a depth may be measured and calculated based on structured light. Specifically, encoded structured light (for example, a random speckle light spot) is projected onto an object surface (which may also be understood as that an encoded light source is projected onto the object surface), the object surface presents the random speckle light spot, a camera shoots a pattern presented on the object surface after the encoded structured light is projected, and depth information is calculated based on a location of the camera and a deformation degree of the pattern. However, in this depth estimation method, a large quantity of professional devices are used, costs are high, a one-time investment is large, and device maintenance is difficult.

Related technology 3: In an existing depth estimation method, monocular depth estimation may be used. Specifically, an image is shot by using a single-angle monocular camera, and depth information may be obtained by inputting the image into a depth model obtained through training. However, accuracy of monocular depth estimation is low, an estimation distance is limited, and the obtained depth information is inaccurate.

For example, a used depth model is monodepth2, and monocular depth estimation is performed through self-supervised learning. monodepth2 includes a depth network and a pose network, and a training process is specifically as follows: A plurality of consecutive frames of images are obtained. For adj acent frames of images, an image depth is estimated by using the depth network and a pose change between a previous frame and a current frame is calculated by using the pose network. Based on an output result, a re-projection image is jointly constructed, a re-projection error is calculated, and a network model is trained and optimized, so that the depth information is predicted based on a trained network model. However, a method for estimating poses of a previous frame and a current frame is easily affected by movement. Consequently, an estimated pose is inaccurate, further, re-projection error calculation is affected, and finally, the predicted depth information is inaccurate.

Related technology 4: In an existing depth estimation method, a binocular depth estimation method may alternatively be used. Specifically, a binocular camera includes two cameras, and a user manually calibrates locations of the cameras, and obtains image information shot by the two cameras, for example, location information of each pixel in an image. Feature points of images shot by the two cameras are matched, to determine a common point in the two images. Then, parallax value calculation is performed on the common point, that is, a matching error is calculated. Finally, a depth is calculated according to a depth calculation formula. However, the cameras for binocular depth estimation need accurate registration, and information from the two cameras needs to be processed simultaneously, resulting in high calculation complexity and costs. In addition, correction accuracy of the binocular camera also affects accuracy of depth estimation.

In related technologies, in some depth estimation solutions, a high-precision instrument is used to perform depth estimation, to obtain accurate depth information, but hardware costs are excessively high; and in some other depth estimation solutions, a low-precision instrument is used to perform depth estimation, so that hardware costs are reduced, but finally obtained depth estimation information is inaccurate.

To resolve problems in the existing related technologies, embodiments of this application provide a depth estimation method. In the method, a to-be-detected image captured by a camera and radar data synchronously collected by a radar sensor are obtained, and a reference line in the to-be-detected image is determined. Then, the radar data is registered with the to-be-detected image, and the registered to-be-detected image includes a radar line. A mask corresponding to the to-be-detected image is determined based on the radar line and the reference line. Then, a depth image corresponding to the to-be-detected image is obtained based on the radar data, the mask, and the to-be-detected image. In this way, an important area (an area between the reference line and the radar line) in the to-be-detected image is determined based on the mask, and a depth of the to-be-detected image is accurately estimated based on image data and the radar data that are fully fused in the important area. In addition, the radar data in this application is two-dimensional radar data, that is, the radar data may be collected by a low-cost radar sensor. Therefore, precision and accuracy of depth estimation are effectively improved, and hardware costs of a depth estimation solution are reduced, that is, accurate estimation is implemented at low costs.

In this embodiment of this application, a depth estimation model includes a depth estimation network and a pose estimation network, and both the two networks are neural networks. A neural network is an algorithm network that can perform learning, summarizing, and generalizing, and may be built in a single device in a form of neural network software and/or hardware, for example, neural network program or executable script. The neural network can learn, summarize, and generalize by experimenting on and using training data, to improve a recognition capability of the neural network.

Generally, a neural network includes a plurality of layers of neurons (operators), such as an input layer, an intermediate layer, and an output layer. Each layer has a plurality of inputs and outputs, and one or more weights (weights). The plurality of inputs, the plurality of outputs, and the plurality of weights may be indicated in a form of vector (vector) or matrix (matrix). An output result of a layer is equal to a result of a mathematical operation like adding or multiplying inputs and a weight of the layer, and usually involves a matrix multiplication operation, that is, involves a large quantity of multiplication, addition, and sum operations.

In this embodiment of this application, a process of optimizing a weight of each layer based on training data to improve an algorithm model is referred to as a training process. A process of performing a training task by using one piece of training data and implementing one correction on a weight of each layer is referred to as one training iteration.

The foregoing training iteration may include a forward process and a backward process. In the forward process, the neural network processes input training data and the weight of each layer by layer, and finally obtains a recognition result corresponding to the training data. For example, the 1^{st} intermediate layer calculates output data of the 1^{st} intermediate layer based on training data provided by the input layer and a weight matrix of the 1^{st} intermediate layer. Then, the 2^{nd} intermediate layer uses the output data of the 1^{st} intermediate layer as training data of the 2^{nd} intermediate layer, and calculates output data of the 2^{nd} intermediate layer based on a weight matrix of the 2^{nd} intermediate layer. The output data of the 2^{nd} intermediate layer is used as training data of the 3^{rd} intermediate layer. By analogy, the output layer uses output data of the last intermediate layer as training data, and calculates output data of the output layer based on a weight matrix of the output layer, namely, the recognition result of the entire neural network. Then, a deviation between the recognition result and a human-made label is used as a back propagation error of the output layer, namely, a back propagation error of the entire neural network, the error is introduced to a loss function, and the backward process is started.

In the backward process, the neural network processes the input back propagation error and the weight of each layer by layer, to obtain a weight update amount (also referred to as a gradient, gradient) of each layer, and obtains a new weight of each layer based on the update amount and the original weight of each layer, to complete a training iteration of the neural network. For example, the output layer calculates a weight matrix update amount of the output layer, a new weight matrix, and a back propagation error of the last intermediate layer based on the back propagation error of the entire neural network and the weight matrix of the output layer. Then, the last intermediate layer calculates a weight matrix update amount and a new weight matrix of the last intermediate layer and a back propagation error of the penultimate intermediate layer based on the back propagation error and a weight matrix of the last intermediate layer. The rest may be deduced by analogy until a new weight matrix of each layer of the neural network is obtained.

For ease of understanding embodiments of this application, the following specifically describes, with reference to the accompanying drawings, a depth estimation method provided in embodiments of this application.

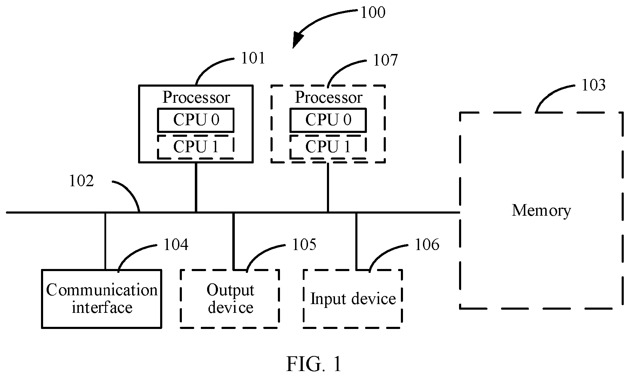

First, a training device 100 shown in FIG. 1 is used as an example to describe in detail a training device applicable to a depth estimation model in the depth estimation method provided in embodiments of this application.

As shown in FIG. 1, the training device 100 includes one or more processors, for example, a processor 101 and/or a processor 107, at least one communication interface like a communication interface 104, and a communication line 102. Optionally, the communication apparatus 100 may further include a memory 103. The following uses the processor 101 as an example for description.

The processor 101 may be a general-purpose central processing unit (central processing unit, CPU), a microprocessor, an application-specific integrated circuit (application-specific integrated circuit, ASIC), an FPGA (field programmable gate array, namely, field programmable gate array), or one or more integrated circuits integrating a plurality of circuit processing functions (for example, a CPU+ an ASIC).

The communication line 102 may include one or more paths for connecting different components.

The communication interface 104 may be a transceiver circuit, and is configured to communicate with another device or a communication network like a cloud computing network, the Ethernet, a radio access network (radio access network, RAN), or a wireless local area network (wireless local area network, WLAN). For example, the transceiver circuit may be an apparatus like a transceiver. Optionally, the communication interface 104 may alternatively be an input/output (input/output, I/O) circuit of the processor 101, and is configured to implement signal input and signal output of the processor 101.

The memory 103 may be an apparatus having a storage function. The memory 103 may be, for example, a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instruction structure or data structure and that is accessible to a computer, but is not limited thereto. The memory 103 may exist independently, and is connected to the processor 101 through the communication line 102. Certainly, the memory 103 may alternatively be integrated with the processor 101.

The memory 103 is configured to store computer-executable instructions for performing the solutions in this application, and the processor 101 controls execution of the computer-executable instructions. The processor 101 is configured to read and execute the computer instructions (for example, used for the CPU) or a configuration file (for example, used for the FPGA) stored in the memory 103, to implement the depth estimation model training method provided in embodiments of this application.

Alternatively, optionally, in embodiments of this application, the processor 101 may perform a related processing function in the depth estimation model training method provided in the following embodiments of this application, and the communication interface 104 is responsible for communicating with another device or a communication network. This is not specifically limited in embodiments of this application.

Optionally, the computer-executable instructions in embodiments of this application may also be referred to as application program code. This is not specifically limited in embodiments of this application.

In a specific implementation, in an embodiment, the processor 101 may include one or more CPUs, for example, a CPU 0 and a CPU 1 in FIG. 1.

In a specific implementation, in an embodiment, the training device 100 may include a plurality of processors, such as the processor 101 and the processor 107 in FIG. 1. Each of the processors may be a single-core (single-CPU) processor, or may be a multi-core (multi-CPU) processor. The processor herein may be one or more devices, circuits, and/or processing cores configured to process data (for example, computer program instructions).

In a specific implementation, in an embodiment, the training device 100 may further include an output device 105 and an input device 106. The output device 105 communicates with the processor 101, and may output information in a plurality of manners. For example, the output device 105 may be a touchscreen, a liquid crystal display (liquid crystal display, LCD), a light emitting diode (light emitting diode, LED) display device, a cathode ray tube (cathode ray tube, CRT) display device, a projector (projector), or a printer (printer). The input device 106 communicates with the processor 101, and may receive an input from a user in a plurality of manners. For example, the input device 106 may be a mouse, a keyboard, a touchscreen device, a camera, or a radar sensor. In this embodiment of this application, the input device 106 is configured to input a training image and radar data.

The training device 100 sometimes may also be referred to as a training device, and may be a general-purpose device or a dedicated device. For example, the training device may be a client, a desktop computer, a portable computer, a network server, a personal digital assistant (personal digital assistant, PDA), a mobile phone, a tablet computer, a wireless terminal device, an embedded device, or a single device having a structure similar to that in FIG. 1. Certainly, the training device 100 may alternatively be a software entity and/or a hardware entity disposed inside each of the foregoing single devices, for example, a chip or a chip system configured to perform a training task provided in embodiments of this application. A type of the training device 100 is not limited in embodiments of this application.

It should be understood that FIG. 1 is merely a simplified diagram of an example for ease of understanding. The depth estimation model training device may further include another component, circuit, or apparatus. This is not shown in FIG. 1.

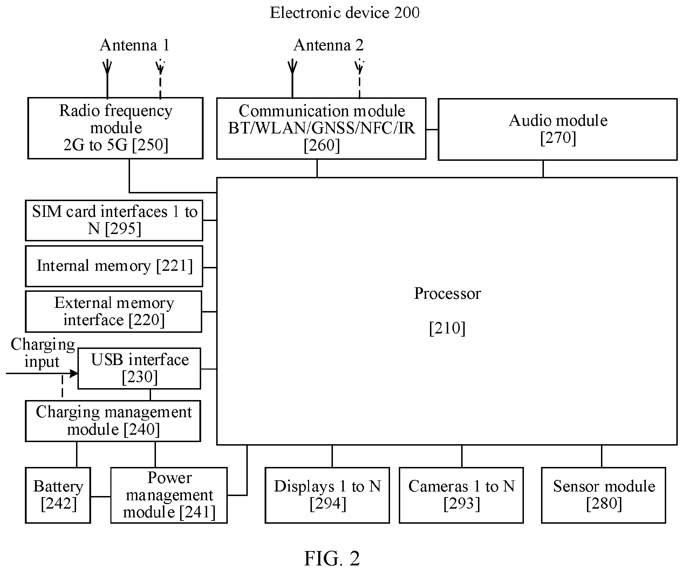

FIG. 2 shows an electronic device that performs a depth estimation method by using a depth estimation model obtained through training by the training device 100 shown in FIG. 1 according to an embodiment of this application.

In embodiments of this application, the electronic device may be a device having a display function, like a mobile phone, a tablet computer, a vehicle, an intelligent robot, a wearable device, an in-vehicle device, an augmented reality (augmented reality, AR)\virtual reality (virtual reality, VR) device, a notebook computer, an ultra-mobile personal computer (ultra-mobile personal computer, UMPC), a netbook, a personal digital assistant (personal digital assistant, PDA), or an artificial intelligence (artificial intelligence, AI) electronic device. A specific form of the electronic device is not specially limited in embodiments of this application.

In embodiments of this application, the vehicle may be a car, a truck, a motorcycle, a bus, a ship, an airplane, a helicopter, a lawn mower, an entertainment car, a playground vehicle, a construction device, a tram, a golf cart, a train, a handcart, or the like. This is not specially limited in embodiments of this application.

An electronic device 200 may include a processor 210, an external memory interface 220, an internal memory 221, a USB interface 230, a charging management module 240, a power management module 241, a battery 242, an antenna 1, an antenna 2, a radio frequency module 250, a communication module 260, an audio module 270, a sensor module 280, a camera 293, a display 294, a SIM card interface 295, and the like.

A structure shown in embodiments of the present invention does not constitute a limitation on the electronic device 200. The electronic device 200 may include more or fewer components than those shown in the figure, or a combination of a part of the components, or splits from a part of the components, or an arrangement of different components. The components shown in the figure may be implemented by hardware, software, or a combination of software and hardware.

The processor 210 may include one or more processing units. For example, the processor 210 may include an application processor (application processor, AP) and/or a memory. Different processing units may be independent components, or may be integrated into one or more processors.

The memory may be further disposed in the processor 210, and is configured to store instructions and data. In some embodiments, the memory in the processor is a cache, and may store the instructions or the data recently used or cyclically used by the processor. If the processor needs to use the instructions or the data again, the processor may directly invoke the instructions or the data from the memory. This avoids repeated access and reduces waiting time of the processor, thereby improving system efficiency.

The external memory interface 220 may be configured to connect to an external memory card like a micro SD card, to expand a storage capability of the electronic device 200. The external memory card communicates with the processor through the external memory interface, to implement a data storage function. For example, files such as music and videos are stored in the external memory card.

The internal memory 221 may be configured to store computer-executable program code, and the executable program code includes instructions. The processor 210 runs the instructions stored in the internal memory 221, to perform various functional applications and data processing of the electronic device 200. The memory 221 may include a program storage region and a data storage region. The program storage region may store an operating system, an application required by at least one function, and the like. The data storage region may store data created during use of the electronic device 200, and the like. In addition, the memory 221 may include a high-speed random access memory, and may further include a non-volatile memory like at least one magnetic disk storage device, a flash memory, another volatile solid-state storage device, or a universal flash storage (universal flash storage, UFS).

The USB interface 230 may be a mini USB interface, a micro USB interface, a USB Type-C interface, or the like. The USB interface may be configured to connect to a charger to charge the electronic device 200, or may be configured to transmit data between the electronic device 200 and a peripheral device, or may be configured to connect to a headset for playing an audio through the headset.

The charging management module 240 is configured to receive a charging input from the charger. The charger may be a wireless charger or a wired charger. When the charging management module charges the battery, the power management module 241 may further supply power to an electronic device.

The power management module 241 is configured to connect the battery 242, the charging management module 240, and the processor 210. The power management module receives inputs/an input of the battery and/or the charging management module, and supplies power to the processor, the internal memory, the external memory, the display, and the like. The power management module may be further configured to monitor parameters such as a battery capacity and a battery health status (leakage or impedance).

The antenna 1 and the antenna 2 are configured to transmit and receive electromagnetic wave signals. Each antenna in the electronic device 200 may be configured to cover one or more communication frequency bands. Different antennas may be further multiplexed, to improve antenna utilization. For example, a cellular network antenna may be multiplexed as a diversity antenna of a wireless local area network. In some embodiments, the antenna may be used in combination with a tuning switch.

The radio frequency module 250 may provide a communication processing module for a solution including wireless communication such as 2G to 5G applied to the electronic device 200. The radio frequency module receives an electromagnetic wave through the antenna 1, perform processing such as filtering or amplification on the received electromagnetic wave, and transmit a processed electromagnetic wave to a modem for demodulation.

The communication module 260 may provide a communication processing module for a solution that is applied to the electronic device 200 and that includes wireless communication such as a wireless local area network (wireless local area network, WLAN), Bluetooth (Bluetooth, BT), a global navigation satellite system (global navigation satellite system, GNSS), a near field wireless communication (near field communication, NFC) technology, and an infrared (infrared, IR) technology. The communication module 260 may be one or more components integrating at least one communication processing module. The communication module receives an electromagnetic wave through the antenna 2, performs frequency modulation and filtering processing on the electromagnetic wave signal, and sends a processed signal to the processor.

In some embodiments, in the electronic device 200, the antenna 1 is coupled to the radio frequency module, and the antenna 2 is coupled to the communication module, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, an IR technology, and/or the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), a satellite based augmentation system (satellite based augmentation system, SBAS), and/or the like.

The audio module 270 is configured to convert digital audio information into an analog audio signal for output, and is further configured to convert an analog audio input into a digital audio signal. The audio module may be further configured to: encode and decode an audio signal.

The sensor module 280 of the electronic device 200 may specifically include a radar sensor, a pressure sensor, a distance sensor, an ambient light sensor, a fingerprint sensor, a temperature sensor, a touch sensor, and the like. The touch sensor is also referred to as a "touch panel", and may be disposed on the display. The touch sensor is configured to detect a touch operation performed on or near the touch sensor. In embodiments of this application, the radar sensor is configured to collect radar data.

The camera 293 is configured to capture a static image or a video. An optical image of an object is generated through a lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. In some embodiments, the electronic device 200 may include one or N cameras, where N is a positive integer greater than 1. In embodiments of this application, the camera is configured to capture a to-be-detected image.

The display 294 is configured to display an image, a video, or the like. The display includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a Mini LED, a Micro LED, a Micro-OLED, a quantum dot light emitting diode (quantum dot light emitting diode, QLED), or the like. In some embodiments, the electronic device 200 may include one or N displays, where N is a positive integer greater than 1. In embodiments of this application, the display 294 may be configured to display the to-be-detected image.

The electronic device 200 may further include components such as the battery 242 and the SIM card interface 295. This is not limited in embodiments of this application.

In embodiments of this application, a depth estimation model may be trained based on the training device 100 shown in FIG. 1, and the depth estimation model obtained through training is applied to the electronic device shown in FIG. 2 (or may be an execution device).

In a possible embodiment, the execution device and the training device may be different processors deployed on one physical device (for example, a server). For example, the execution device may be a central processing unit (central processing unit, CPU), another general purpose processor, a digital signal processor (digital signal processor, DSP), an application-specific integrated circuit (application-specific integrated circuit, ASIC), a field-programmable gate array (field-programmable gate array, FPGA), or another programmable logic device, a discrete gate or transistor logic device, or a discrete hardware component. The general-purpose processor may be a microprocessor or any conventional processor or the like. Alternatively, the training device may be a graphics processing unit (graphics processing unit, GPU), a neural network processing unit (neural network processing unit, NPU), a microprocessor, an application-specific integrated circuit (application-specific integrated circuit, ASIC), or one or more integrated circuits configured to control program execution in solutions of this application.

In another possible embodiment, the execution device and the training device may alternatively be different physical devices in a cluster. The execution device includes a processor, and the processor is configured to implement a function of determining an image depth based on a depth estimation model obtained in the foregoing training process. The processor may be, for example, a CPU, another general purpose processor, a DSP, an ASIC, an FPGA or another programmable logic device, a discrete gate or a transistor logic device, or a discrete hardware component. The training device includes a processor, and the processor is configured to implement functions of training and optimizing a depth estimation model in the foregoing training process. The processor may be, for example, a GPU or an NPU.

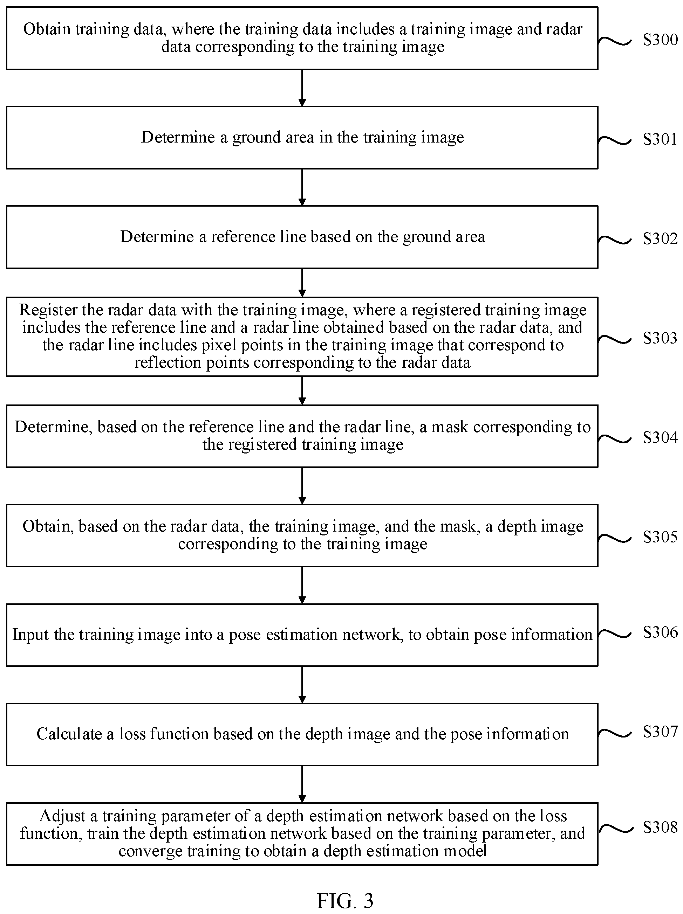

FIG. 3 is a flowchart of a depth estimation model training method according to an embodiment of this application. The method includes the following steps.

S300: Obtain training data, where the training data includes a training image and radar data corresponding to the training image.

In this embodiment of this application, the training image may be an image actually shot by a camera, and the image is generally a two-dimensional color image. When the camera shoots the training image, the radar data corresponding to the training image is synchronously obtained through a radar sensor. The radar data may be two-dimensional radar data.

For example, the training data may be data collected in a vehicle moving process or collected by an intelligent robot.

A vehicle is used as an example, a camera in the vehicle and a radar sensor (for example, a single-line lidar) synchronously collect data in a vehicle driving process. Specifically, the camera shoots a road image in front of the vehicle, and the single-line lidar detects radar data in front of the vehicle. The road image captured by the camera is used as the training image, and the radar data collected by the radar is used as the radar data corresponding to the training image. In this way, a large amount of training data may be obtained by collecting a large quantity of training images and corresponding radar data.

S301: Determine a ground area in the training image.

In some embodiments of this application, the ground area in the training image is determined based on a segmentation network.

Optionally, the segmentation network may be a semantic segmentation network, an image segmentation network, or the like.

For example, the semantic segmentation network is used to segment different semantic objects. For example, semantic objects of an image scene may include a road, a tree, a pedestrian, and a vehicle. The road is used as a segmentation semantic, and the semantic segmentation network segments the road and a semantic object other than the road into different areas, to obtain a ground area including the road and a non-ground area excluding the road.

For example, the training image may be a road image in front of the vehicle shot by a dashboard camera in the vehicle driving process. The road image may include objects such as a road, a vehicle, a building, or a pedestrian. The training image is input into an image segmentation network trained based on a driving labeled video database (Cambridge-driving labeled video database, CamVid). The image segmentation network is used to recognize a specific label of each object in the training image, and determines, based on a preset label, an area including the preset label. For example, a label corresponding to each object in the training image is first recognized, and an area including a road label is determined as the ground area, and an area excluding the road label is determined as the non-ground area.

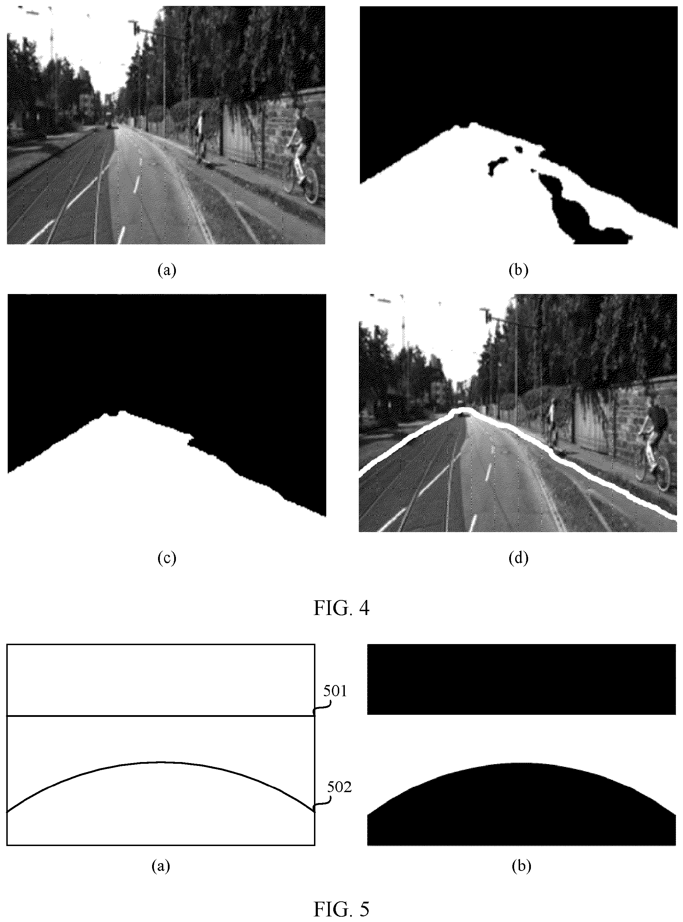

As shown in FIG. 4, (a) in FIG. 4 is the road image in front of the vehicle shot by the dashboard camera, namely, the training image. (b) in FIG. 4 shows an image obtained by recognizing the training image based on the image segmentation network. A white area in the image is the ground area, and a black area is the non-ground area.

In some other embodiments of this application, the ground area in the training image is determined based on pixel information included in the training image.

The pixel information included in the training image is a color component value corresponding to each pixel in the training image, for example, an RGB (red green blue) value or an HSV (hue, saturation, value, hue, saturation, value) value.

Optionally, different objects correspond to different pixel information, and a common color of a same object is generally fixed, that is, a color component value of a pixel corresponding to the object falls within a specific range. For example, the road is usually yellow, brown, or black (like a color of an asphalt road), and the tree is usually green.

In this embodiment of this application, based on pixel information of each pixel in the training image, when a color component value corresponding to a pixel in the training image matches a ground pixel, the pixel is determined as a ground pixel; otherwise, the pixel is determined as a non-ground pixel. Each area including a ground pixel is a ground area, and an area including a non-ground pixel is a non-ground area. In the training image, there may be one or more ground areas and one or more non-ground areas.

S302: Determine a reference line based on the ground area.

In this embodiment of this application, the reference line is an auxiliary line for accurately aligning an object in the training image. The reference line may also be referred to as a visual horizontal line.

In this embodiment of this application, after the ground area of the training image is determined, an operation like connectivity check, complement, or expansion is performed on the ground area, to determine the reference line in the training image.

In actual application, there may be a plurality of ground areas in the training image, or there may be some obstacles in the ground area, for example, road signs on both sides of the road or vehicles parked on both sides of the road. In addition, the ground area determined based on the segmentation network has a chaotic and rough boundary.

In this embodiment of this application, connectivity check is performed on the ground area, to first check whether a contour of the ground area is continuous and complete, so as to ensure connectivity of the contour line of the ground area. Then, a missing part in the ground area is complemented, to obtain a complete and accurate ground plane area. Finally, the ground area is expanded, and a boundary contour line of an outermost ground plane in a processed ground area is extracted as the reference line.

(c) in FIG. 4 shows an image that includes a complete ground area and that is obtained after the operation like connectivity check or complement is performed on the ground area in the image shown in (b) in FIG. 4. (d) in FIG. 4 shows an image obtained after the reference line in the training image is determined, and a white curve in the image is the reference line.

It may be understood that the reference line is determined based on the ground area on which the operation like connectivity check, complement, or expansion is performed, and the reference line is a complete and continuous reference line. Location information in the reference line is accurate and complete, and helps improve accuracy of depth estimation.

S303: Register the radar data with the training image, where a registered to-be-detected image includes the reference line and a radar line obtained based on the radar data, and the radar line includes pixels in the training image that correspond to reflection points corresponding to the radar data.

The radar data is data detected and collected by the radar sensor. The radar sensor includes the single-line lidar and the like. The single-line lidar sensor transmits a detection signal (for example, an electromagnetic wave or a laser beam) to an object, and then receives a target signal (which may also be referred to as a target echo) reflected by a reflection point of the lidar. The detection signal and the target signal are compared and processed, so that spatial location information of the reflection point of the lidar and distance information between the reflection point and the single-line lidar sensor are obtained, and a dataset of spatial points obtained through scanning by the single-line lidar is obtained by combining information about all reflection points of the lidar. In other words, the dataset is the radar data collected by the single-line lidar.

For example, the single-line lidar in the vehicle may be mounted to a front bumper of the vehicle, and face forward. A laser transmitter of the single-line lidar emits a beam of modulation laser signal forward in a horizontal direction. In other words, a laser is emitted in parallel to the ground, to detect radar data of an object in front of the vehicle. The modulation laser signal is received by a laser detector after being reflected by the object, that is, the laser detector receives a reflected laser. A distance between the object and the vehicle is calculated by measuring and calculating a phase difference between the emitted laser and the reflected laser. In addition, the object is positioned based on the reflected laser, and spatial location information of the object is determined, to obtain the radar data detected by the single-line lidar.

In a possible implementation, a specific implementation of registering the radar data with the training image, where the registered training image includes the reference line and the radar line obtained based on the radar data includes: jointly calibrating the radar sensor and the camera, to determine a transformation matrix (which may also be a registration matrix); and registering the radar data with the training image based on the transformation matrix, where the registered training image includes the reference line and the radar line obtained based on the radar data.

For example, based on mounting parameters of the single-line lidar (such as a distance from the single-line lidar to the left side of the vehicle and a distance from the single-line lidar to the right side of the vehicle), mounting parameters of the vehicle dashboard camera (such as a distance from the dashboard camera to a vehicle head, a distance from the dashboard camera to the left side of the vehicle, a distance from the dashboard camera to the right side of the vehicle, a mounting height, azimuth angle, pitch angle, and roll angle of the dashboard camera), and internal and external parameters (such as a memory matrix and an external parameter matrix), the radar sensor and the camera are jointly calibrated, to determine the transformation matrix. The radar data is transformed based on the transformation matrix and registered into the training image. In other words, a pixel in the training image corresponding to a reflection point corresponding to each piece of radar data is determined based on the transformation matrix, and radar data of each reflection point is filled into a corresponding pixel in the training image. Therefore, the registered training image includes the reference line and the radar line obtained based on the radar data. In this case, spatial coordinate information of each pixel on the registered radar line is the same as coordinate information of the pixel in the image.

It may be understood that a scanning mode of the single-line lidar sensor has only one-row mode. Therefore, after the radar data is registered and transformed based on the transformation matrix, the single-line lidar data is represented as a line in the training image, and a line consisting of pixels in the training image that correspond to reflection points corresponding to the single-line lidar data is referred to as the radar line.

In another possible implementation, a same feature point of the radar data and the training image data is determined, the transformation matrix is obtained through transformation based on feature point data, and registration is performed on the radar data and the training image based on the transformation matrix. For example, the camera is used to shoot a triangular object to obtain the training image, and the lidar sensor scans the triangular object to obtain the radar data. A vertex of the triangular object is used as the feature point of the radar data and the training image data, the transformation matrix is obtained through transformation based on the radar data and the image data of the feature point, and the radar data obtained through scanning by the lidar sensor is registered with the training image shot by the camera based on the transformation matrix. The registered training image includes the reference line and the radar line obtained based on the radar data.

It may be understood that registering performed on the radar data and the training image is to transform the radar data and the image data in the training image into a same coordinate system. In this way, spatial point data at a same location in different spatial coordinate systems is transformed into a same coordinate system, to implement information fusion of the radar data and the image data.

(a) in FIG. 5 shows the training image obtained after the radar data is registered with the training image, where the registered training image includes a radar line 501 and a reference line 502.

S304: Determine, based on the reference line and the radar line, a mask corresponding to the registered training image.

In an image processing process, a selected image, graph, or object is used to shield a to-be-processed image (all or a part of the to-be-processed image), to control a shielded area in the to-be-processed image. The object or image covered on the to-be-processed image is referred to as a mask. In other words, a part of area or all area in the image is selected as an area of interest based on the mask.

The mask is used to determine the area of interest in the image, so that attention is focused on the area of interest in a subsequent image processing process.

In this embodiment of this application, a specific implementation of determining, based on the reference line and the radar line, the mask corresponding to the training image is: determining, as a first area (that is, the area of interest in the training image), a closed area enclosed by the radar line, the reference line, and a boundary of the training image in the registered training image, and setting a pixel value of each pixel in the first area to a first value; and determining a remaining area as a second area, and setting a pixel value of each pixel in the second area to a second value, to obtain the mask corresponding to the registered training image.

For example, as shown in (b) in FIG. 5, the area enclosed by the reference line, the radar line, and the boundary line is determined as the first area based on the mask that corresponds to the registered training image and that is determined based on the reference line and the radar line, and the remaining area is the second area. The pixel value of each pixel in the first area is set to 1, and the first area is correspondingly displayed in white. The pixel value of each pixel in the second area is set to 0, and the second area is correspondingly displayed in black. In this way, the mask corresponding to the registered training image is obtained. The mask is used to indicate a depth estimation network to focus attention on the first area when performing depth estimation.

It may be understood that the image is divided into the first area and the second area based on the reference line and the radar line that are in the registered training image. For the first area, because the reference line and the radar line are parallel lines, accuracy of data in the training image corresponding to the first area is higher, and the area is filled in white. For the second area, the area is filled in black, and data in the training image corresponding to the area does not participate in subsequent processing and calculation. In this way, in the subsequent training, data that needs to be focused on can be clearly known based on the mask.

S305: Obtain, based on the radar data, the training image, and the mask, a depth image corresponding to the training image.

After the radar data is filled in the entire training image, a grayscale image corresponding to the training image may be obtained. The grayscale image, the training image, and the mask are input into the depth estimation network, to obtain the depth image corresponding to the training image.

For example, radar data of each pixel on the radar line is fused with image data of each pixel in a same vertical direction, so that the radar data is filled in the entire training image, to obtain the radar grayscale image corresponding to the training image.

In this embodiment of this application, a spatial attention mechanism is obtained by performing point multiplication on the mask and the radar grayscale image corresponding to the training image, and the depth image corresponding to the training image is obtained based on the spatial attention mechanism and the training image.

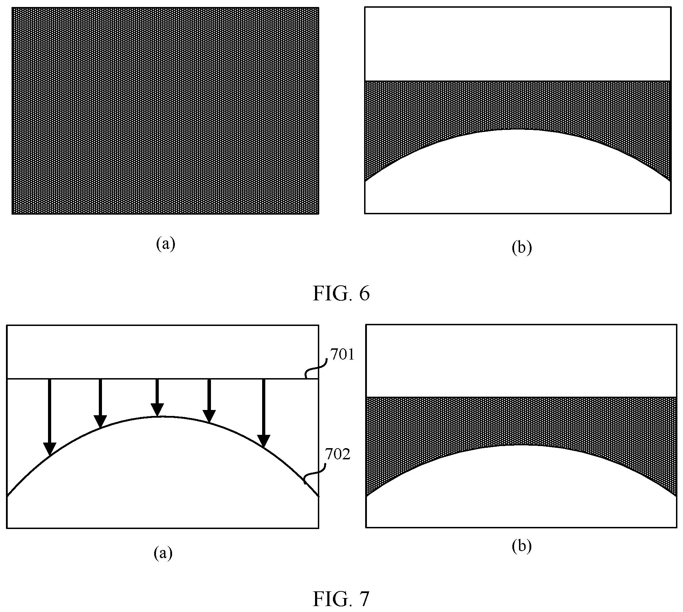

As shown in FIG. 6, based on the mask shown in (b) in FIG. 5, (a) in FIG. 6 shows the radar grayscale image obtained by filling the radar data in the entire training image. (b) in FIG. 6 shows the spatial attention mechanism obtained by performing point multiplication on the mask in (b) in FIG. 5 and the grayscale image corresponding to the training image in (a) in FIG. 6.

In this embodiment of this application, the depth estimation network may be a U-Net structured neural network constructed based on the spatial attention mechanism. The depth estimation network uses four channels to input information (three channels are RGB color image channels, and one channel is used for inputting the spatial attention mechanism), and the depth estimation network estimates an image depth based on the spatial attention mechanism.

In this embodiment of this application, when the depth estimation network estimates the depth image corresponding to the training image, the depth estimation network performs high-precision estimation on the training image based on the spatial attention mechanism.

In this way, during depth estimation, based on the spatial attention mechanism, attention is mainly focused on data corresponding to the spatial attention mechanism, and high-precision estimation is performed, so that accuracy of depth estimation can be improved.

In this embodiment of this application, when the depth image corresponding to the training image is estimated based on the depth estimation network, to improve accuracy of depth estimation, the training image, the radar grayscale image obtained after the training image is filled with the radar data, and the mask may be input into the depth estimation network. The spatial attention mechanism is determined based on the radar grayscale image and the mask. When the depth estimation network estimates the training image depth, self-supervised learning is performed, so that estimation precision is improved, and accuracy of depth estimation can also be ensured, to obtain a multi-scale depth image corresponding to the training image.

Optionally, in another implementation, a manner of obtaining the spatial attention mechanism further includes: After the mask is determined based on the reference line and the radar line, in the obtained radar grayscale image, only radar data of each pixel on the radar line is fused with image data (like location information) of a pixel on the reference line corresponding to the pixel in the vertical direction, to obtain an area grayscale image corresponding to the closed area image enclosed by the radar line, the reference line, and the boundary, and in the image area other than the closed area, radar data is not fused with image data, so that the spatial attention mechanism is obtained.

As shown in FIG. 7, based on an example in (a) in FIG. 5, (a) in FIG. 7 shows the training image obtained after the radar data is registered to the training image, and radar data of each pixel on a radar line 701 is fused with image data of a pixel on a reference line 702 corresponding to the pixel in the vertical direction. For example, in the vertical direction, radar data (including spatial location information and distance information) of a pixel A1 on the radar line 501 and location information of a pixel A2 on the reference line corresponding to A1 are fused, and fused information includes spatial location information and distance information. (b) in FIG. 7 shows a grayscale image obtained through fusion. Radar data and image data in a gray area are fused, and radar data and image data in a white area are not fused. The grayscale image is determined as the spatial attention mechanism.

It may be understood that, because the radar data is collected by the radar sensor horizontally, the radar line and the reference line in the registered training image are horizontal in space, and the radar data corresponding to the radar line and the image data corresponding to the reference line may be fully fused, so that an error is small.

S306: Input the training image into a pose estimation network, to obtain pose information.

In this embodiment of this application, the training image is input into the pose estimation network, and the pose information of the camera is estimated based on the pose estimation network. The pose estimation network may be a neural network that is used for pose estimation and that is obtained through training based on a large quantity of sample images.

For example, the pose estimation network performs feature extraction on the training image, performs convolution and pooling operations, maps and aggregates a feature map after convolution to a fully connected layer, and separately predicts a translation matrix and a rotation matrix of the training image. In addition, upsampling and convolution operations are performed on the feature map, to obtain a feature map that has a same size as the training image, so as to obtain the pose information of the camera that shoots the training image, that is, determine location and posture information of the camera.

An execution sequence of step S305 and step S306 is not limited in embodiments of this application.

S307: Calculate a loss function based on the depth image and the pose information.

In this embodiment of this application, the loss function is comprehensively calculated based on the depth image output by the depth estimation network and the pose information output by the pose estimation network. The loss function is used to evaluate a difference degree between a real value and a predicted value of the depth estimation network, to further evaluate performance of the depth estimation network.

For example, a training image set that is continuously shot includes a training image 1 and a training image 2 that are adjacent frames of images. For the training image 1, a depth image A is obtained based on the depth estimation network, and pose information A is obtained based on the pose estimation network. For the training image 2, a depth image B is obtained based on the depth estimation network, and pose information B is obtained based on the pose estimation network. A correspondence between the two is calculated based on the depth image A, the depth image B, the pose information A, and the pose information B. The depth image A is processed based on a difference between the depth image B and the depth image A to obtain a depth image A1, and the processed depth image A1 approaches the depth image B. For the depth image A1, pose information A1 is obtained through calculation based on the correspondence. The pose information B is compared with the location information A1, and the loss function is determined as an error between the two.

S308: Adjust a training parameter of the depth estimation network based on the loss function, train the depth estimation network based on the training parameter, and converge training to obtain a depth estimation model.

**In** this embodiment of this application, the training parameter of the depth estimation network is adjusted based on the loss function, and then for a new training image, the foregoing steps are repeated based on the depth estimation network whose training parameter is adjusted, until the loss function of the depth estimation network meets a preset convergence condition. **In** this case, training ends, and the depth estimation model obtained through training is obtained.

The convergence condition may include two indicators: an edge-aware smoothing loss (edge-aware smoothness loss) and a per-pixel photometric loss. It may be understood that the parameter of the depth estimation network is adjusted based on the loss function, the foregoing steps are repeated by using the depth estimation network whose parameter is adjusted, and when the loss function converges, the training ends.

In this embodiment of this application, an important area, namely, the ground area, in the training image is determined, and the operation like connectivity check is performed on the ground area to determine the reference line. The radar data is registered with the training image, where the registered training image includes the reference line and the radar line obtained based on the radar data. The mask corresponding to the training image is determined based on the reference line and the radar line. Then, the radar grayscale image corresponding to the training image, the mask, and the training image are input into the depth estimation network, to obtain the depth image corresponding to the training image. The training image is input into the pose estimation network to obtain the pose information. The loss function is calculated based on the depth image and the pose information that are output by the two networks, and the training parameter of the depth estimation network is adjusted based on the loss function, until the training is converged to obtain the depth estimation model. Because the reference line and the radar line are parallel lines, the image data and the radar data in the area between the radar line and the reference line can be fully fused, to obtain accurate depth information. In addition, the spatial attention mechanism is introduced into the depth estimation network. When the depth image corresponding to the training image is predicted, high precision estimation is performed on an important area (the area between the radar line and the reference line) based on the spatial attention mechanism, to improve accuracy of the depth image output by the depth estimation network. In addition, training is continuously optimized based on the training data and the loss function, to optimize and improve accuracy of the depth estimation model.

It may be understood that the depth estimation model obtained through training can predict high-precision depth information. Therefore, the image depth may be estimated based on the depth estimation model obtained through training.

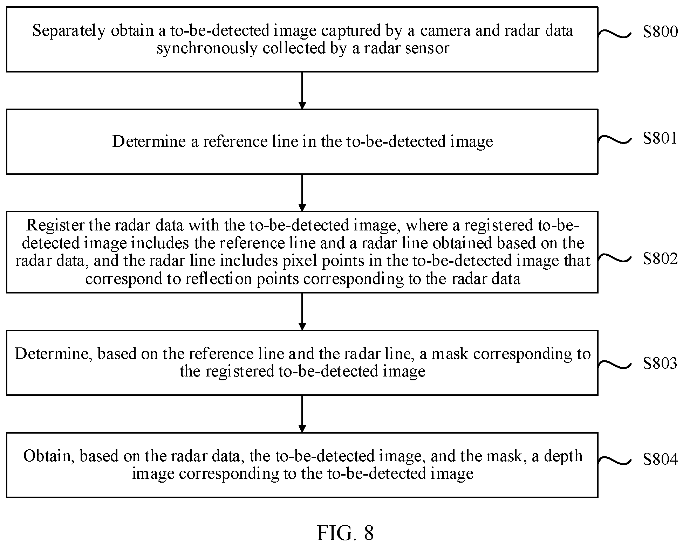

After the depth estimation model obtained through training is obtained, the depth estimation model is applied to the electronic device shown in FIG. 2, to perform a depth estimation method shown in FIG. 8.

In this embodiment of this application, FIG. 8 is a flowchart of a depth estimation method according to an embodiment of this application. The method includes the following steps.

S800: Separately obtain a to-be-detected image captured by a camera and radar data synchronously collected by a radar sensor.

In this embodiment of this application, the to-be-detected image may be an image actually shot by the camera, and the image is generally a two-dimensional color image. When the camera shoots the to-be-detected image, the radar data corresponding to the to-be-detected image is synchronously obtained through the radar sensor. The radar data may be two-dimensional radar data collected by the radar sensor like a single-line lidar.

S801: Determine a reference line in the to-be-detected image.

In this embodiment of this application, a ground area in the to-be-detected image is first determined, then an operation like connectivity check, complement, or expansion is performed on the ground area, and a boundary contour line of an outermost ground plane in a processed ground area is used as the reference line.

For a specific determining manner of determining the ground area in the to-be-detected image, refer to descriptions of S301. Details are not described herein again.

For example, the to-be-detected image may be an image that is in front of an intelligent robot and that is shot by a camera in the intelligent robot. The ground area in the to-be-detected image is recognized based on an image segmentation network, and the ground area in the to-be-detected image is determined.

For example, when the intelligent robot moves on land, the horizon may be used as the reference line of the to-be-detected image; or when the intelligent robot moves on the sea, the sea level may be used as the reference line of the to-be-detected image.

For a specific implementation of determining the reference line based on the ground area, refer to descriptions of S302. Details are not described herein again.

S802: Register the radar data with the to-be-detected image, where a registered to-be-detected image includes the reference line and a radar line obtained based on the radar data, and the radar line includes pixels in the to-be-detected image that correspond to reflection points corresponding to the radar data.

For example, the obtained radar data is registered with the to-be-detected image, a transformation matrix is determined, and the radar data is registered with the to-be-detected image based on the transformation matrix. The registered to-be-detected image includes the reference line and the radar line obtained based on the radar data.

For a specific implementation of registering the radar data with the to-be-detected image, refer to S303. Details are not described herein again.

S803: Determine, based on the reference line and the radar line, a mask corresponding to the registered to-be-detected image.

For a specific implementation of determining, based on the reference line and the radar line, the mask corresponding to the to-be-detected image, refer to S304. Details are not described herein again.

For example, an area between the reference line and the radar line in the to-be-detected image is a first area, and a pixel value of each pixel in the first area is set to a first value; and a remaining area is a second area, and a pixel value of each pixel in the second area is set to a second value, to obtain the mask corresponding to the registered to-be-detected image.

S804: Obtain, based on the radar data, the to-be-detected image, and the mask, a depth image corresponding to the to-be-detected image.

After the entire to-be-detected image is filled with the radar data, a radar grayscale image corresponding to the to-be-detected image may be obtained. The radar grayscale image, the mask, and the to-be-detected image are input into a depth estimation model obtained through training, and the depth estimation model outputs the depth image corresponding to the to-be-detected image.

In this embodiment of this application, the depth estimation model is the depth estimation model obtained through training based on S300 to S308.

In this embodiment of this application, the radar grayscale image corresponding to the to-be-detected image, the mask, and the to-be-detected image are input into the depth estimation model obtained through training, and the depth estimation model outputs the depth image corresponding to the to-be-detected image. The depth estimation model obtained through training performs high-precision depth estimation on important data in the to-be-detected image based on a spatial attention mechanism, so that accuracy of depth estimation can be ensured.

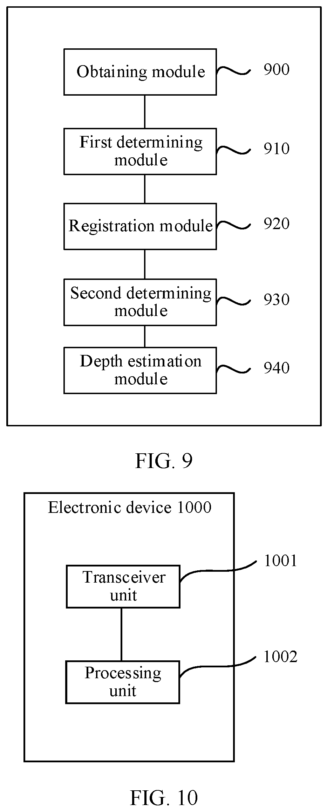

FIG. 9 shows a depth estimation system architecture to which a technical solution in an embodiment of this application is applicable. This depth estimation system includes an obtaining module 900, a first determining module 910, a registration module 920, a second determining module 930, and a depth estimation module 940.

The obtaining module 900 is configured to separately obtain a to-be-detected image captured by a camera and radar data synchronously collected by a radar sensor.

The first determining module 910 is configured to determine a reference line in the to-be-detected image.

In some embodiment of this application, a ground area in the to-be-detected image is first determined, then an operation like connectivity check, complement, or expansion is performed on the ground area, and a boundary contour line of an outermost ground plane in a processed ground area is used as the reference line.

The registration module 920 is configured to register the radar data with the to-be-detected image, where a registered to-be-detected image includes the reference line and a radar line obtained based on the radar data, and the radar line includes pixels in the to-be-detected image that correspond to reflection points corresponding to the radar data.

The second determining module 930 is configured to determine, based on the reference line and the radar line, a mask corresponding to the registered to-be-detected image.

The depth estimation module 940 is configured to obtain, based on the radar data, the to-be-detected image, and the mask, a depth image corresponding to the to-be-detected image.

In this embodiment of this application, after the entire to-be-detected image is filled with the radar data, a radar grayscale image corresponding to the to-be-detected image may be obtained. The mask, the to-be-detected image, and the radar grayscale image corresponding to the to-be-detected image are input into a depth estimation model obtained through training, and the depth estimation model outputs the depth image corresponding to the to-be-detected image.

In some embodiments of this application, the depth estimation model includes a depth estimation network and a pose estimation network.

In this way, the depth estimation model obtained through training is used to perform high-precision depth estimation based on important data in the to-be-detected image, so that accuracy of depth estimation can be ensured.

A system architecture and a service scenario described in this application are intended to describe technical solutions of this application more clearly, and do not constitute a unique limitation to the technical solutions provided in this application. A person of ordinary skill in the art may know that, with evolution of a system architecture and emergence of a new service scenario, the technical solutions provided in this application are also applicable to similar technical problems.

The depth estimation method provided in embodiments of this application is described in detail above with reference to FIG. 3 to FIG. 9. The following describes in detail an electronic device provided in embodiments of this application with reference to FIG. 10.

In a possible design, FIG. 10 is a diagram of a structure of an electronic device according to an embodiment of this application. As shown in FIG. 10, an electronic device 1000 may include a transceiver unit 1001 and a processing unit 1002. The electronic device 1000 may be configured to implement functions of the electronic device in the foregoing method embodiments.

Optionally, the transceiver unit 1001 is configured to support the electronic device 1000 in performing S300 in FIG. 3, and/or is configured to support the electronic device 1000 in performing S800 in FIG. 8.

Optionally, the processing unit 1002 is configured to support the electronic device 1000 in performing S301, S302, S303, S304, S305, S306, S307, and S308 in FIG. 3, and/or is configured to support the electronic device 1000 in performing S801, S802, S803, and S804 in FIG. 8.

The transceiver unit may include a receiving unit and a sending unit, may be implemented by a transceiver or a transceiver-related circuit component, and may be a transceiver or a transceiver module.

Optionally, the electronic device 1000 shown in FIG. 10 may further include a storage unit (not shown in FIG. 10), and the storage unit stores a program or instructions. When the transceiver unit 1001 and the processing unit 1002 execute the program or the instructions, the electronic device 1000 shown in FIG. 10 may perform the depth estimation method in the foregoing method embodiments.

Operations and/or functions of units in the electronic device 1000 are respectively intended to implement corresponding procedures of the depth estimation method in the foregoing method embodiments. All related content of steps in the foregoing method embodiments may be cited in function descriptions of corresponding functional units. For brevity, details are not described herein again.

For technical effects of the electronic device 1000 shown in FIG. 10, refer to technical effects of the depth estimation method in the foregoing method embodiments. Details are not described herein again.

In addition to a form of the electronic device 1000, the technical solutions provided in this application may alternatively be a functional unit or a chip in the electronic device, or an apparatus that matches the electronic device for use.

An embodiment of this application further provides an electronic device, including a sensor system and a processor.

The sensor system may include several sensors that sense surrounding environment information of the electronic device, for example, a radar sensor and a camera.

The radar sensor can use a radio signal to sense an object in a surrounding environment of the electronic device, to collect radar data.

The camera may be configured to capture an image of the surrounding environment of the electronic device, and capture a to-be-detected image. The camera may be a still camera or a video camera.

The processor may be any conventional processor, like a CPU or an ASIC or another dedicated device of a hardware-based processor. A person of ordinary skill in the art should understand that the processor, a computer system, or a data storage apparatus may actually include a plurality of processors, computer systems, or data storage apparatuses stored in a same physical housing, or include a plurality of processors, computer systems, or data storage apparatuses stored in different physical housings. For example, the data storage apparatus may be a hard disk drive or another storage medium located in a different physical housing. Therefore, references to the processor or the computer system will be understood as including references to a set of processors or computer systems or data storage apparatuses that can be operated in parallel, or references to a set of processors or computer systems or data storage apparatus that may not be operated in parallel. Different from using a single processor to perform the steps described herein, some components such as a steering component and a deceleration component may include respective processors. The processor performs only computation related to a component-specific function.

The processor is configured to separately obtain the to-be-detected image captured by the camera and the radar data synchronously collected by the radar sensor.

The processor is further configured to determine a reference line in the to-be-detected image.

The processor is further configured to register the radar data with the to-be-detected image, where a registered to-be-detected image includes the reference line and a radar line obtained based on the radar data, and the radar line includes pixels in the to-be-detected image that correspond to reflection points corresponding to the radar data.

The processor is further configured to determine, based on the reference line and the radar line, a mask corresponding to the registered to-be-detected image.

The processor is further configured to obtain, based on the radar data, the to-be-detected image, and the mask, a depth image corresponding to the to-be-detected image.

An embodiment of this application further provides a chip system, including a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory (read-only memory, ROM). The memory and the processor may be integrated on a same chip, or may be respectively disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of a software module and hardware in the processor.

An embodiment of this application further provides a computer-readable storage medium. The computer-readable storage medium stores a computer program. When the computer program is run on a computer, the computer is enabled to perform the foregoing related steps, to implement the depth estimation method in the foregoing embodiments.

An embodiment of this application further provides a computer program product. When the computer program product runs on a computer, the computer is enabled to perform the foregoing related steps, to implement the depth estimation method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the depth estimation method in the foregoing method embodiments.

The apparatus, the computer-readable storage medium, the computer program product, or the chip provided in embodiments of this application is configured to perform the corresponding method provided above. Therefore, for beneficial effects that can be achieved, refer to beneficial effects in the corresponding method provided above, and details are not described herein again.

Methods or algorithm steps described in combination with the content disclosed in embodiments of this application may be implemented by hardware, or may be implemented by a processor by executing a software instruction. The software instruction may include a corresponding software module. The software module may be stored in a random access memory (random access memory, RAM), a flash memory, a read-only memory, an erasable programmable read-only memory (erasable programmable read-only memory, EPROM), an electrically erasable programmable read-only memory (electrically erasable programmable read-only memory, EEPROM), a register, a hard disk drive, a removable hard disk drive, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

Based on the foregoing descriptions of implementations, a person skilled in the art may clearly understand that, for ease and brevity of description, division of the foregoing functional modules is merely used as an example for description. In actual application, the foregoing functions can be allocated to different functional modules and implemented as required, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed methods may be implemented in other manners. The described apparatus embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electrical, mechanical, or other forms.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

The computer-readable storage medium includes but is not limited to any one of the following: any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A depth estimation method, comprising:
separately obtaining a to-be-detected image captured by a camera and radar data synchronously collected by a radar sensor;
determining a reference line in the to-be-detected image;
registering the radar data with the to-be-detected image, wherein a registered to-be-detected image comprises the reference line and a radar line obtained based on the radar data, and the radar line comprises pixels in the to-be-detected image that correspond to reflection points corresponding to the radar data;
determining, based on the reference line and the radar line, a mask corresponding to the registered to-be-detected image; and
obtaining, based on the radar data, the to-be-detected image, and the mask, a depth image corresponding to the to-be-detected image.

2. The depth estimation method according to claim 1, wherein the determining a reference line in the to-be-detected image comprises:
determining a ground area in the to-be-detected image;
performing at least one of the following processing on the ground area: connectivity check, complement, or expansion; and
determining a boundary contour line of an outermost ground plane in a processed ground area as the reference line.

3. The depth estimation method according to claim 2, wherein the determining a ground area in the to-be-detected image comprises:
recognizing the ground area in the to-be-detected image based on a segmentation network.

4. The depth estimation method according to any one of claims 1 to 3, wherein the registering the radar data with the to-be-detected image, wherein a registered to-be-detected image comprises the reference line and a radar line obtained based on the radar data comprises:
jointly calibrating the radar sensor and the camera, to determine a transformation matrix; and
registering the radar data with the to-be-detected image based on the transformation matrix, wherein the registered to-be-detected image comprises the reference line and the radar line obtained based on the radar data.

5. The depth estimation method according to any one of claims 1 to 4, wherein the determining, based on the reference line and the radar line, a mask corresponding to the registered to-be-detected image comprises:
determining a first area and a second area based on the reference line and the radar line, wherein the first area is a closed area enclosed by the radar line, the reference line, and a boundary of the registered to-be-detected image, and the second area is an area, in the to-be-detected image, other than the first area; and
setting a pixel value of each pixel in the first area to a first value, and setting a pixel value of each pixel in the second area to a second value, to obtain the mask corresponding to the registered to-be-detected image.

6. The depth estimation method according to any one of claims 1 to 5, wherein the depth estimation model is obtained through training based on a training image and radar data corresponding to the training image.

7. The depth estimation method according to claim 6, wherein the method further comprises:
obtaining training data, wherein the training data comprises the training image and the radar data corresponding to the training image;
determining a reference line in the training image;
registering the radar data corresponding to the training image with the training image, wherein a registered training image comprises the reference line of the training image and a radar line obtained based on the radar data corresponding to the training image;
determining, based on the reference line of the training image and the radar line obtained based on the radar data corresponding to the training image, a mask corresponding to the registered training image;
inputting a radar grayscale image, the training image, and the mask into a depth estimation network, to obtain a depth image corresponding to the training image, wherein the radar grayscale image is obtained by filling the training image with the radar data corresponding to the training image;
inputting the training image into a pose estimation network, to obtain pose information;
determining a loss function based on the depth image and the pose information;
adjusting a training parameter of the depth estimation network based on the loss function; and
training the depth estimation network based on the training parameter, and converging training to obtain the depth estimation model.

8. A depth estimation apparatus, comprising:
an obtaining module, configured to separately obtain a to-be-detected image captured by a camera and radar data synchronously collected by a radar sensor;
a first determining module, configured to determine a reference line in the to-be-detected image;
a registration module, configured to register the radar data with the to-be-detected image, wherein a registered to-be-detected image comprises the reference line and a radar line obtained based on the radar data, and the radar line comprises pixels in the to-be-detected image that correspond to reflection points corresponding to the radar data;
a second determining module, configured to determine, based on the reference line and the radar line, a mask corresponding to the registered to-be-detected image; and
a depth estimation module, configured to obtain, based on the radar data, the to-be-detected image, and the mask, a depth image corresponding to the to-be-detected image.

9. An electronic device, wherein the electronic device comprises a processor, a camera, and a radar sensor;
the camera is configured to capture a to-be-detected image;
the radar sensor is configured to synchronously collect radar data with the camera;
the processor is configured to separately obtain the to-be-detected image captured by the camera and the radar data synchronously collected by the radar sensor;
the processor is further configured to determine a reference line in the to-be-detected image;
the processor is further configured to register the radar data with the to-be-detected image, wherein a registered to-be-detected image comprises the reference line and a radar line obtained based on the radar data, and the radar line comprises pixels in the to-be-detected image that correspond to reflection points corresponding to the radar data;
the processor is further configured to determine, based on the reference line and the radar line, a mask corresponding to the registered to-be-detected image; and
the processor is further configured to obtain, based on the radar data, the to-be-detected image, and the mask, a depth image corresponding to the to-be-detected image.

10. The electronic device according to claim 9, wherein
the processor is further configured to determine a ground area in the to-be-detected image;
the processor is further configured to perform at least one of the following processing on the ground area: connectivity check, complement, or expansion; and
the processor is further configured to determine a boundary contour line of an outermost ground plane in a processed ground area as the reference line.

11. The electronic device according to claim 10, wherein
the processor is further configured to recognize the ground area in the to-be-detected image based on a segmentation network.

12. The electronic device according to any one of claims 9 to 11, wherein
the processor is further configured to jointly calibrate the radar sensor and the camera, to determine a transformation matrix; and
the processor is further configured to register the radar data with the to-be-detected image based on the transformation matrix, wherein the registered to-be-detected image comprises the reference line and the radar line obtained based on the radar data.

13. The electronic device according to any one of claims 9 to 12, wherein
the processor is further configured to determine a first area and a second area based on the reference line and the radar line, wherein the first area is a closed area enclosed by the radar line, the reference line, and a boundary of the registered to-be-detected image, and the second area is an area, in the to-be-detected image, other than the first area; and
the processor is further configured to: set a pixel value of each pixel in the first area to a first value, and set a pixel value of each pixel in the second area to a second value, to obtain the mask corresponding to the registered to-be-detected image.

14. A chip system, comprising at least one processor and at least one interface circuit, wherein the at least one interface circuit is configured to: perform a transceiver function and send instructions to the at least one processor, and when the at least one processor executes the instructions, the at least one processor performs the method according to any one of claims 1 to 7.

15. A computer-readable storage medium, wherein the computer-readable storage medium comprises a computer program, and when the computer program is run on an electronic device, the electronic device is enabled to perform the method according to any one of claims 1 to 7.

16. A computer program product, wherein when the computer program product runs on a computer, the computer is enabled to perform the method according to any one of claims 1 to 7.
